# EUROPEAN PATENT APPLICATION

(11) **EP 1 310 282 A2**
(43) Date of publication of application: **14.05.2003**
(21) Application number: 02024862.1
(22) Date of filing: 08.11.2002
(51) Int. Cl.: A63F 13/12

(54) **Electronic gaming system**

(30) Priority: 12.11.2001 GB 0127125
(71) Applicant: Nokia Corporation, 02150 Espoo (FI)
(72) Inventor: Hannay, Alexander, London W4 1JZ (GB)
(74) Representative: Haws, Helen

(57) **Abstract**

This invention provides an electronic game having a ball, a spinner and the environment. The ball moves around the environment and as it touches the environment is depleted of some energy and bounced back. The spinner is controlled by the player so as to move into the path of the ball and if the spinner touches the ball the spinner boosts the energy of the ball and changes its direction of travel.

## Description

The present invention relates to electronic games and in particular to electronic games in the context of mobile gaming.

The present invention in one aspect resides in an electronic gaming system for an electronic game, the system comprising means for generating a first on-screen graphical element that is configured to move about the game space of the electronic game, means for generating a second on-screen graphical element that is configured to move about the game space of the electronic game under end-user control and means for generating a third on-screen graphical element, the system being so arranged that in operation the first element is configured to move about the game space of the electronic game contacting the second and third elements, wherein when the first element comes into contact with second element an energy level associated with the first element is elevated and the direction of travel of the first element in changed, and when the first element comes into contact with the third element the energy level is reduced and the first element moves away from the third element if it has a sufficient energy level to do so.

According to the invention in a preferred form, the end-user's aim is to keep various elements of the game world mobile. If the end-user allows these elements to become stationary the game is ended or another kind of penalty is incurred. Thus, the invention concerns maintaining movement in objects over which the end-user has no direct control, where the factor that reduces movement in the objects is a fixed or permanent feature of the game.

In advantageous embodiment, there are three elements of the invention; a mobile element directly controlled by the player [element1], one or more mobile elements that are indirectly controlled by the player [element2] and a fixed element that the mobile elements interact with [element3]. The game begins with a number of element2 in motion within element3. As the element2 touch element3 they lose momentum. The end-user moves element1 around within element3 and touches element2 with it which has two effects - the element2 moves at full momentum afterwards, and in a different direction than before.

The invention extends to areas concerned with client-server systems and the downloading and more generally enabling the provision of content for a client terminal.

Other aspects and features of the invention are defined in the appended claims.

In order to aid a better understanding of the present invention, embodiments of the invention will now be described. These should not be construed as limiting the invention but merely as examples of specific ways of putting the invention into effect. In particular, the invention will be described with reference to the accompanying drawings in which:
Figure 1 is a schematic of client-server system in accordance with a preferred arrangement of the present invention;
Figure 2 is a schematic representation of one embodiment of the present invention;
Figure 3 is an illustration of one operation of the embodiment of Figure 1.

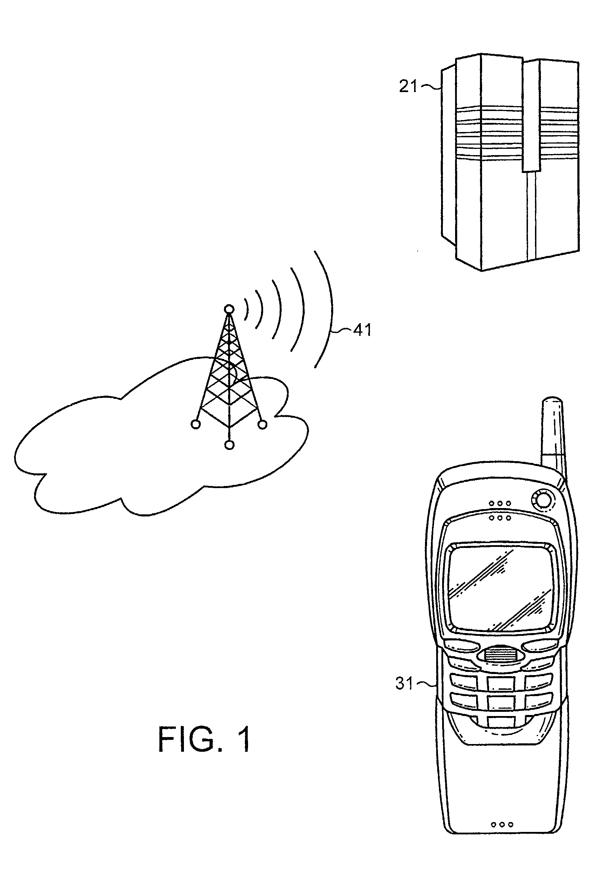

Figure 1 outlines three entities of the present invention, namely a server 10 that holds content for downloading, an end user's mobile phone 12 that is able to download the content, and an operator network 14 that provides a telecommunications service to the mobile phone 12. The server 10 has a unique URL address and using this can be accessed by the end user through the mobile phone 12 which may be WAP, iMODE, 2.5 or 3G enabled, and which is equipped for mobile gaming.

In the following example, reference will be made to mobile gaming and games content for a mobile phone platform, although the invention is in no way intended to be limited to mobile gaming; its application will also work in the field of any other electronic/video games.

Mobile gaming is a term used to refer to all aspects of electronic games in the context of mobile communications. It is not uncommon nowadays for mobile phones to have, pre-loaded on a memory of the phone, content relating to one or more electronic games. The game is run by the mobile phone's processor, and it is played using the phone's User Interface (UI) which normally involves the use of the display and one or more of the keys. In order to play a game, the end user navigates through the phone's various main menu options to the Games option and then selects the particular electronic game he or she wishes to play. Certain keys of the mobile phone's keypad are pre-assigned for enabling the end user to control certain predetermined features of the game, usually in relation to other features of the game which are under the control of the software of the game. In this way, the end user can be regarded as playing 'against the computer'. Additionally, in a multi-player session in which two (or more) players player the game against each other, each end user (player) controls his/her particular game's character to compete with the other player(s).

Typically, an electronic game which is designed to be played on a mobile phone platform is created by a content provider, who may be the mobile phone manufacturer or a third party. Like any platform wishing to execute games software of an electronic game, the mobile phone makes use of its memory for storing the game and its processor for running the game. The electronic game comprises a games engine that provides the general functions of the game including instructions and routines for gameplay, for example by drawing of library functions that define how games characters may interact during game play. The electronic game also has gaming parameters that set out the environmental factors that define the backdrop to the game. Then there are gaming parameters relating to characters of the games, these being entities of the game under end user control and with which the end user during gameplay associates himself, for instance a team in a sports game, or a fighter in a combat game. In the games content, a combination of these factors define the look and feel of the game, its characters, its objectives, its rules of operation.

In order to afford variation in gameplay, in-built into the games software, typically, is the ability to have different levels of gameplay ranging in complexity. This is usually implemented in the software by making changes to characters, features, aspects and other parameters of the basic gameplay. The content provider may additionally create new levels and/or versions for the game. When new levels and/or versions are applied to the game it modifies the games content. Modified games content has associated with it an identifier tag that identifies the version that has been used in its construction. Typically, as the content provider continues to design and develop more challenging and innovative versions of the games, so the end user continues to remain interested and engaged. In addition, when these new levels are provided on an internet website for downloading therefrom, the mobile phone manufacturer or content provider benefits in increased traffic and stimulating content for the website.

The mobile phone manufacturer may embed the games content onto the phone during manufacture, or authorise downloading of the games content onto the phone.

As indicated previously, the present invention sets out to provide an electronic gaming system in which the end-user is challenged to keep one or more on-screen objects continually moving around the screen.

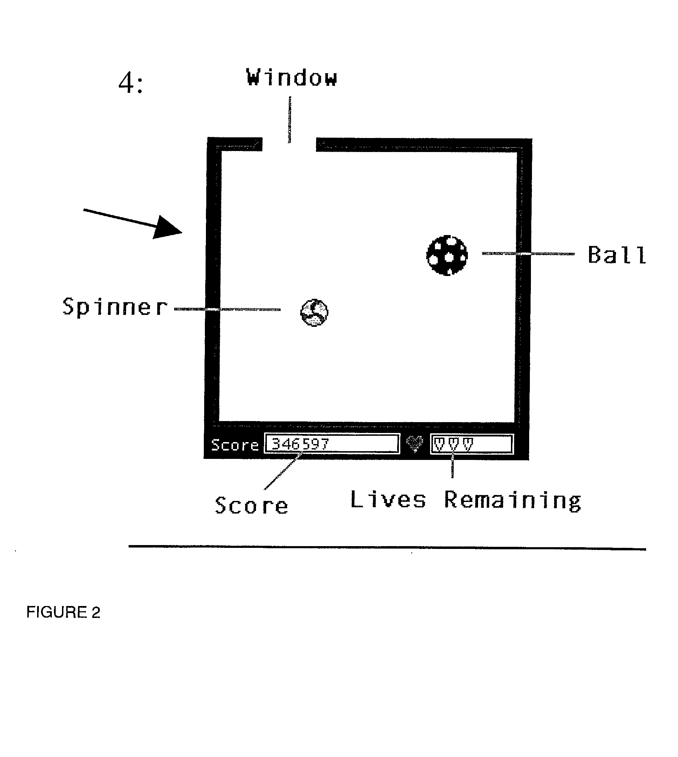

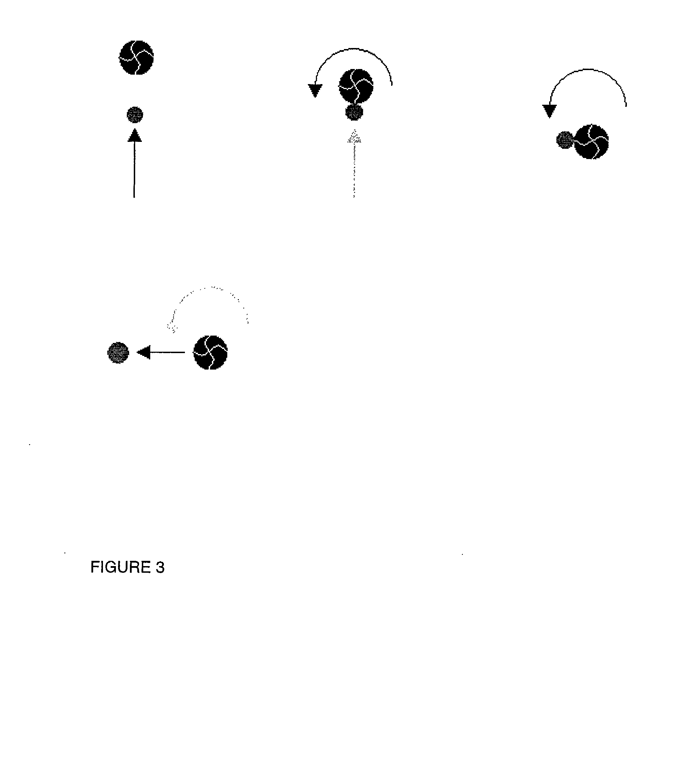

One form of the system of the present invention is illustrated in Figure 2 which shows a screen including three software generated graphical elements in the context of the game herein termed "Bizzy". A first element, Element 1, is a 'spinner' which is under the control of the user and which serves to adds momentum to, and change the direction of a second element, Element 2, 'a ball' which moves about a third element, Element 3, the games landscape. During gameplay in Bizzy, the objective for the end user is to control the spinner so as to keep one or more balls (2) permanently in motion within the landscape (3). The end-user uses the spinner (1) to add momentum to the ball (2) within the bounded environment of the landscape (3). The system is configured such that whenever a ball (2) touches the landscape (3) it bounces and slows down. It is the end-user's task to keep the ball (2) moving by directing control over the movement and positioning of the spinner (1) such that the spinner (1) is located on the screen so as to be able to contact the moving ball (2). When the spinner (1) touches the ball (2), this injects momentum into the ball (2) while at the same time causes the ball (2) to change direction. The game is over when all the balls have burst. In a specific arrangement, the system operates such that whenever a ball touches a wall of the landscape it slows down by a third, thus if the ball hits a wall three times without having momentum added to it by the end-user's spinner the ball will stop and pop. In this specific arrangement, whenever the spinner touches one of the balls the ball attaches to the spinner and is rotated 270 degrees, and released at full momentum, this is illustrated in Figure 3. The end-user cannot move the spinner while a ball is attached. The system operates such that end-user loses points every time a ball pops.

The gaming landscape preferably is designed to provide a hectic scene in which there is constant movement on the screen all the time the game is running, and in which the end-user is constantly struggling to keep control over the movement of the balls. Advantageously, there is a strong graphical contrast between the moving elements of the game and the static landscape elements. The balls and the spinner are brightly coloured/patterned, for example inspired in the manner of jester's clothing, while the landscape frame and other landscape features are dull and solid looking by comparison. The landscape may be embodied in a watermark-like graphic. Such a graphic lends itself to customisation for commercial tie-ins. For example, it might be attractive for providers of business software whose clients are using the software to manage complicated processes where many factors need to be successfully "juggled".

In the embodiment of Figure 2 the screen is split into two areas; the field of play and the information area. The field of play displays all the elements of the game's action including the three principal elements: the spinner, the ball and the landscape. While the information area displays the player's score along with other data. For example in a multiplayer challenge it may display the number of lives that are remaining, or in a single player game it may display the amount of time the end-user has managed to keep the balls in play.

It is possible to modify the system defining the basic game structure described above to provide a wide variety of different game implementations of the present invention. Conveniently, the system may be configured to provide three difficulty levels for the game; these being Easy, Medium and Hard. The difficulty level determines how many of the game's features are introduced into the gameplay. Many factors can be altered to affect the game's difficulty. For instance:
- the size of the Spinner,
- the speed at which the Spinner can be moved,
- the number of balls that are allowed to be in play,
- the speed of movement of the balls,
- the number of hazards/bonuses introduced.

The system is constructed such that depending on the difficulty level and on how far into the game the end-user has progressed, there will be one or more balls in motion. In certain variations there may be more than one Spinner, although one is preferred. In the Easy level the landscape is a simple box. The Medium level offers more complex landscapes which may include angled protrusions and free floating islands which can make the course of the ball more interesting. The Hard level provides still further features and hazards and bonuses. Hazards are features of the landscape that only the ball can hit, while Bonuses appear in the main playing area and can only be touched by the Spinner. A ball only hits the landscape and its features, while Bonuses can only be picked up when the spinner passes through them - the ball will simply pass over these Bonuses leaving them untouched. Hazards that can be added to the landscape could include 'spikes' that pop the ball on contact, 'grease' that speeds a ball up, 'inflators' that increase the size of the ball and deflators that reduce it. Bonuses that can be added to the landscape could include 'reversers' that reverse the direction of the spinner, 'slow-downs' that slow the spinner as it moves across the screen and 'speed-ups' that increase the speed at which it moves around the screen

Additionally, there are three versions of the game; a Skeleton version, a Solo version and a Complete version. The Skeleton version features only a plain boxed landscape, a single ball, single player game, greyscale palette and no hazards/bonuses. The Solo version features a extra landscapes, more than one ball, single player game only, colour palette and a selected hazards/bonuses. The Complete version features all available landscapes, more than one ball, multiplayer capability, colour palette and all the hazards/bonuses that allow an end-user to customise the gameplay.

In a specific form, the present invention is implemented in an electronic game suitable for a mobile phone, and in this form of the invention in order to control the on-screen spinner the end-user makes use of the phone's key control interface comprising an array of keys on keypad of the mobile phone. In this form of the invention, the game makes use of all the number keys between 1 and 9. Keys 1-4 and 6-9 being employed to govern eight directions of movement for the spinner and key 5 is employed to input for example a handover to the next person in a chain in a multiplayer challenge game. Played on other gaming platforms, a games controller/joystick could be used in which a D-pad would govern directional movement and the <Enter> key would input during a Challenge game.

As indicated previously, the present invention can be adapted for single player or multiplayer modes of operation. The multiplayer modes includes a mode for two players only (a peer-to-peer communication) and a mode for two players or more (a one-to-many session). Multiplayer modes may be enabled in a diverse manner of ways. For example, the play in a multiplayer game may be through a network such as a cellular network, or it may be a local area network (LAN). Alternatively, the communication may be means of Bluetooth, in which case the end-users handsets would be Bluetooth enabled. Alternatively, the communication may be made by means of infra-red. The communication arrangement may be set up as a master/slave relationship in which a first end-user's handset acts as a master terminal and the second and further end-users' handsets act as slave terminals. In the master/slave arrangement, the first user's handset carries out the events, sequences and instructions relating to the gameplay and sends these to the other end-users' handsets. Hence, one end-user sets up the game for a number of players. The game is played one player at a time and passed down the line of players in turn. The system provides a window feature (4 in Figure 2) of the landscape environment that allows the a player to freeze the game (i.e. stop the game at a particular instant during gameplay) for passing on to the next player in the line of players. More specifically, the window feature is a window in the landscape, given by a gap in the bounding edge of the landscape and it represents an opening into the next player's landscape. The window may be configured to move along one or more of the walls of the landscape (one of the North, East or West walls). If a player manages to send a ball through the window the game state is paused and the player's handset sends the game state to the next player in the chain. The next in line of his opponents accordingly receives the game state including the sent ball in his field of play and it becomes live in this opponents landscape.

It is convenient to consider the two multiplayer modes as Match and Challenge.

Match Mode is for two players only. Both players start with the same game - the same number of balls and the same landscape, with a window in the landscape. As the game progresses other balls are introduced just as they would be in the single player game (after a certain amount of points or time).

If a player sends one of his balls through the window it is taken from his screen and introduced to his opponent's. When a player gets rid of one his balls in this way he receives another ball to replace it, so as to keep him in the action. There is a maximum number of balls that can be displayed on the screen for performance and graphical reasons and if a player has reached this maximum when a ball is passed over to his machine (giving him maximum + 1) then the incoming ball pops at the window as it comes in.

Challenge Mode is where a number of players (2+) form a sequential chain in a local area network game. The host of the game starts it off, everyone has the same landscape but only the host has a ball to play with. The next person in the chain along from the host has the opportunity to add bonuses to the host's screen while he is playing. The host continues to play until one of two things happens; either the ball pops or it passes through the window.

If the ball pops the player responsible loses a life and, if that was his last life, exits the game. When the ball pops the game is passed on to the next person in the chain - they start with a new ball and play continues.

If the ball passes through the window the game is also passed to the next player; the game's state is passed intact so the way the ball behaves and the number of bonuses present is the same as when the ball was passed.

There is also the opportunity for a player of the game dynamically to add features while the game is being played. As players lose control of the situation and balls in their care are popped, they are removed from the chain of players. When a ball pops in a game, the game automatically is paused and the system controls the gameplay so that the player's handset automatically sends the frozen game to the next person in the chain. The game ends when only one player remains, or when the host player drops out.

In the single player and multiplayer game there is a timer in the information area that calculates the amount of time the game has been running. This can be used as an extension of the scoring system to provide points of comparison between players. In a multiplayer game the timer may be replaced by a life meter that displays the number of lives remaining for a particular player. The player loses a life whenever he fails to keep the balls under responsibility moving and allows a ball to pop.

In a multiplayer game the next person in the chain may have a single button with functionality which he can use to add hazards/bonuses to the landscape dynamically while it is being played by the person before them in the chain.

The present invention provides great scope for end-users themselves to alter game characteristics. For example, end-users can submit their own graphics for the ball and the spinner to be used in future versions. This may be achieved by an end-user visiting a particular games related website to learn how to make a design and then upload his efforts. End-users may customise the game sound effects by installing their own tones. In a multiplayer game, the game's host can personalise the failure message received when a ball pops, to insult his friends in extremely personal ways. End-users can download new background graphics to personalise their field of play.

Furthermore, players can upload their high scores to a website supported by the content provider or manufacture to update a list of the game's top scorers.

In a multiplayer game, a player in the chain has a single button with functionality which they can use to add hazards/bonuses to the landscape dynamically while it is being played by the person before them in the chain.

In preferred forms of the invention the system is implemented by a processor under the control of a software module.

Thus, it should be appreciated that the present invention provides a gaming system which harnesses a kinetic game dynamic system that underlies a wide range of possible kinetic games. The system can be incorporated into any electronic game, and could be implemented as the basis for an entire game or as a discrete part of a game which occupies the player's complete attention for a limited time.

In view of the foregoing, it should be appreciated that the present invention may be embodied in other specific forms without departing from its essential attributes. Reference should thus be made to the appended claims and other general statements herein rather than to the foregoing description as indicating the scope of invention.

Furthermore, each feature disclosed in this specification (which term includes the claims) and/or shown in the drawings may be incorporated in the invention independently of other disclosed and/or illustrated features. In this regard, the invention includes any novel feature or combination of features disclosed herein either explicitly or any generalisation thereof irrespective of whether or not it relates to the claimed invention or mitigates any or all of the problems addressed.

The appended abstract as filed herewith is included in the specification by reference.

## Claims

1. An electronic gaming system for an electronic game, the system comprising
means for generating a first on-screen graphical element,
means for generating a second on-screen graphical element and
means for generating a third on-screen graphical element,
the system being configured such that
the means for generating the third on-screen graphical element provides one or more objects,
the means for generating the first on-screen graphical element has an energy level associated with the first graphical on-screen element and is configured to move about the game space of the electronic game contacting the second and third on-screen graphical elements, wherein said energy level is decreased when the first on-screen graphical element contacts an object of the third on-screen graphical element and is increased when the first on-screen graphical element contacts the second on-screen graphical element,
the means for generating the second on-screen graphical element is under the control of an end-user in such a manner as to be able to control the movement of the second element about the game space of the electronic game so as to contact the first on-screen graphical element, wherein the second on-screen graphical element is configured to increase the energy level of the first element responsive to contact with the first element, and the second on-screen graphical element is configured to change the direction of motion of the first element responsive to contact with the first element,
the means for generating the third on-screen element is configured to decrease the energy level of the first element responsive to contact of the first element graphical element with an object of the third on-screen element, wherein the second on-screen graphical element moves away from the third on-screen element if the energy level of the second on-screen graphical element is above a predetermined threshold.

2. An electronic gaming system for an electronic game, the system comprising
means for generating a first on-screen graphical element that is configured to move about the game space of the electronic game,
means for generating a second on-screen graphical element that is configured to move about the game space of the electronic game under end-user control and
means for generating a third on-screen graphical element,
the system being so arranged that
in operation the first element is configured to move about the game space of the electronic game contacting the second and third elements, wherein when the first element comes into contact with second element an energy level associated with the first element is elevated and the direction of travel of the first element in changed, and when the first element comes into contact with the third element the energy level is reduced and the first element rebounds from the third element if it has a sufficient energy level to do so.

3. A system according to claim 1 or claim 2, wherein the third element comprises a boundary defining the game space of the electronic game.

4. A system according to claim 1, 2 or 3, wherein the first element comprises a ball.

5. A system according to claim 4, wherein more than one ball is within the boundary.

6. A system according to any preceding claim, wherein the second element is a spinner.

7. A system according to any preceding claim, wherein the third element includes hazard features and/or bonus features.

8. A method for operating an electronic game, the method comprising
providing a first on-screen graphical element that is configured to move about the game space of the electronic game,
controlling a second on-screen graphical element that is configured to move about the game space of the electronic game under end-user control,
providing a third on-screen graphical element,
the method being operable such that
the first element is configured to move about the game space of the electronic game contacting the second and third elements, wherein when the first element comes into contact with second element an energy level associated with the first element is elevated and the direction of travel of the first element in changed, and when the first element comes into contact with the third element the energy level is reduced and the first element rebounds from the third element if it has a sufficient energy level to do so.

9. A computer program product on a carrier comprising a software module configured to provide an electronic gaming algorithm, the module comprising means for generating a first on-screen graphical element that is configured to move about the game space of the electronic game,
means for generating a second on-screen graphical element that is configured to move about the game space of the electronic game under end-user control and
means for generating a third on-screen graphical element,
the algorithm being so arranged that in operation the first element and is configured to move about the game space of the electronic game contacting the second and third elements, wherein when the first element comes into contact with second element an energy level associated with the first element is elevated and the direction of travel of the first element in changed, and when the first element comes into contact with the third element the energy level is reduced and the first element rebounds from the third element if it has a sufficient energy level to do so.

10. A gaming device including games content for a gaming system configured to provide an electronic gaming system, said device having a memory for storing the games content and a processor for processing the games content, the processor being operable to run the system according to any of claims 1 to 7.
